# EUROPÄISCHE PATENTSCHRIFT

(11) **EP 3 787 946 B1**
(45) Veröffentlichungstag und Bekanntmachung des Hinweises auf die Patenterteilung: **05.06.2024**
(21) Anmeldenummer: 19720459.7
(22) Anmeldetag: 15.04.2019
(51) Int. Cl.: B60T 17/22, B60T 8/17, B60T 8/32

(54) **STEUERUNGSSYSTEM ZUR STEUERUNG EINES BREMSSYSTEMS EINES SCHIENEFAHRZEUGS**
CONTROL SYSTEM FOR CONTROLLING A BRAKING SYSTEM OF A RAILWAY VEHICLE
SYSTÈME DE COMMANDE POUR COMMANDER UN SYSTÈME DE FREINAGE D'UN VÉHICULE FERROVIAIRE

(30) Priorität: 03.05.2018 DE 102018206842
(43) Veröffentlichungstag der Anmeldung: 10.03.2021
(73) Patentinhaber: KNORR-BREMSE Systeme für Schienenfahrzeuge GmbH, 80809 München (DE)
(72) Erfinder: ELSTORPFF, Marc-Gregory, 80368 München (DE); MOSBACH, Christian, 82239 Alling (DE); SÜSSMANN, Alexander, 86482 Aystetten (DE); GRAEBER, Johannes, 80639 München (DE)
(86) Internationale Anmeldenummer: PCT/EP2019/059660
(87) Internationale Veröffentlichungsnummer: WO 2019/211087

(56) Entgegenhaltungen:
- AU-A4- 2013 101 466
- US-A1- 2012 136 514
- US-A1- 2017 232 943
- US-B1- 6 997 520

## Beschreibung

Die vorliegende Erfindung betrifft ein Steuerungssystem zur Steuerung einer oder mehrerer Bremseinheit / Bremseinheiten eines Schienenfahrzeugs.

Ein Schienenfahrzug kann mehrere Arten von Reibungsbremsen aufweisen, wie Scheibenbremsen und Klotzbremsen, wobei bei einer Scheibenbremse die Bremskraft durch Bremszangen oder -sattel auf Bremsscheiben, die am Radkörper befestigt oder auf der Radsatzwelle zwischen den Rädern angeordnet sind, übertragen wird und bei einer Klotzbremse die Bremskraft unmittelbar auf die Lauffläche der Räder wirkt. Im Falle der Scheibenbremse werden in der Regel mehrere Bremseinheiten in einem Drehgestell angeordnet. D. h. z.B. vier Bremseinheiten können auf einem Drehgestell eines Schienenfahrzeuges vorgesehen werden. Jede der Bremseinheiten ist mit einem Aktuator ausgestattet, und die Aktuatoren werden wiederum von einer zentralen Steuerung gesteuert. Bei Bremssystemen mit den Energiemedien Luft oder Hydraulik handelt es sich bei den Aktuatoren um rein mechanische Elemente.

In der Patentanmeldung DE102009042965 A1 wurde der Versuch unternommen, die Aktuatoren der Bremseinheiten "intelligenter" zu gestalten, wobei jeder Aktuator eine Logikeinheit (d. h. eine spezifische Elektronik-Hardware und -Software) und einen Steuerungsanschluss aufweist, um die Bremskraft in Abhängigkeit eines Steuersignals zu steuern. Das Steuersignal wird von einer zentralen Bremssteuerung an die Aktuatoren geliefert. Solche Aktuatoren werden als elektromechanische Aktuatoren (em-Aktuatoren) bezeichnet. Die em-Aktuatoren können zwar mit diesem System individuell angesteuert werden, benötigen jedoch eine zentrale Steuerung.

Die Patentdokumente AU 2013 101 466 A4, US 2017/232943, US 2012/136514 A1 und US 6 997 520 B1 zeigen jeweils ebenso Bremssysteme mit einer Hauptsteuereinheit, welche Bremssignale an weitere Steuereinheiten in den jeweiligen Triebwagen des Zugsystems weitergibt und die dortigen Bremsaktuatoren entsprechend gesteuert werden können, was insbesondere bei langen Zugsystemen vorteilhaft ist, da auf diese Weise spezifisch auf die Fahrsituation eines jeden einzelnen Triebwagens eingegangen werden kann und die entsprechende Bremskraft einzeln eingestellt werden kann.

Der Erfindung liegt die Aufgabe zugrunde, ein verbessertes Steuerungssystem bereitzustellen, um die Funktionalität und/oder die Sicherheit des Bremssystems zu verbessern bzw. zu erhöhen.

Diese Aufgabe wird erfindungsgemäß mit einem Steuerungssystem zur Steuerung eines Bremssystems eines Schienenfahrzeugs nach Anspruch 1 gelöst. Vorteilhafte Ausgestaltungen der Erfindung sind in den Unteransprüchen enthalten.

Erfindungsgemäß besteht die Lösung der Aufgabe in einem Steuerungssystem, das mehrere Steuereinheiten für em-Aktuatoren, die jeweils mit einer Bremseinheit verbunden sind, aufweist, wobei die Steuereinheiten jeweils eine eigene Recheneinheit aufweisen und konfiguriert sind, dass sie direkt miteinander kommunizieren können, um eine oder mehrere bremsenbezogene Aufgaben individuell oder gemeinsam zu lösen. Dadurch ist jede lokale Rechenleistung einer jeden Steuereinheit auch zentral verfügbar. Durch eine zentrale Nutzung von allen Rechenleistungen können z.B. höherwertige Funktionen auf Fahrzeugebene abgebildet bzw. verarbeitet werden.

Das Steuerungssystem ist vorzugsweise so gestaltet, dass die Steuereinheiten eine einheitliche Hardware aufweisen, um Kosten zu sparen.

Die Steuereinheiten sind vorzugsweise mittels eines Bussystems verbunden, um die Kommunikation zwischen den Steuereinheiten zu ermöglichen.

In einem Ausführungsbeispiel können die Steuereinheiten (z.B. eines Drehgestells) so konfiguriert werden, dass eine der Steuereinheiten als Master und die restliche Steuereinheiten als Slave funktionieren, damit die Bremseinheiten dieses Drehgestells von dem Master zentral gesteuert wird.

In einem weiterführenden Ausführungsbeispiel können z.B. zwei der Steuereinheiten unterschiedliche Computerprogramme aufweisen, um eine gleiche Aufgabe mit unterschiedlichen Verfahren zu lösen. Durch den Vergleich der Ergebnisse ist es möglich, Fehleruntersuchungen durchzuführen bzw. Kontrollfunktionen darzustellen.

In einem weiterführenden Ausführungsbeispiel ist das Steuerungssystem so konfiguriert, dass im Fall, dass eine Steuereinheit defekt ist und die dazugehörige Bremseinheit nicht mehr ansteuern kann, oder dass eine Bremseinheit oder der entsprechende em-Aktuator defekt ist, die fehlende Bremskraft dieser Bremseinheit von mindestens einer anderen bzw. mehreren oder gar allen übrigen Bremseinheit(en) kompensiert werden kann, indem die Steuereinheit(en) der anderen Bremseinheit(en) die lokale Bremskraft entsprechend erhöht, höchstens limitiert durch eine maximal zulässige aufzubringende Bremskraft an den jeweiligen Bremseinheiten.

In einem weiterführenden Ausführungsbeispiel ist das Steuerungssystem so konfiguriert, dass die gesamte Rechenleistung der Recheneinheiten der Steuereinheiten zusammen für eine Rechenaufgabe verwendet kann, um eine höherwertige/komplexe Aufgabe zu lösen. Eine solche Rechenaufgabe kann z.B. in der dynamischen Bremskraftverteilung, Verzögerungsregelung, oder Gleitschutzregelung bestehen.

Im Folgenden wird die Erfindung anhand der Figuren näher erläutert.

Es zeigen:
- Fig. 1: ein Bremssystem nach dem Stand der Technik;
- Fig. 2: ein Bremssystem gemäß eines Ausführungsbeispiels der vorliegenden Erfindung.

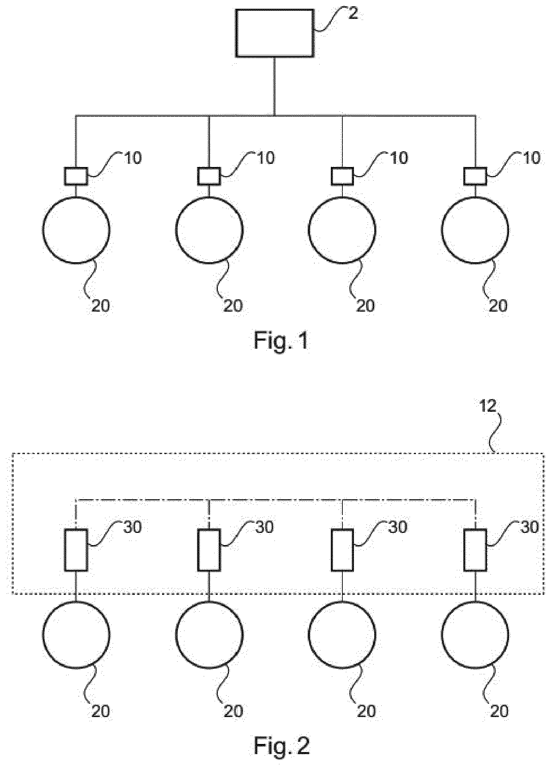

Fig. 1 zeigt schematisch ein herkömmliches Bremssystem mit vier Bremseinheiten 20. Ein em-Aktuator (nicht gezeigt) ist jeweils für eine Bremseinheit vorgesehen, um die Bremse zu betätigen. Logikeinheiten 10 sind jeweils zu den Bremseinheiten 20 angeordnet, um die Aktuatoren zu steuern. Dabei erhält die Logikeinheit 10 lediglich ein Steuersignal von einer zentralen Steuerung 2, um eine entsprechende Bremskraft an der Bremseinheit 20 anzulegen. Die zentrale Steuerung 2 ist mit allen Logikeinheiten 10 verbunden, um diese separat zu steuern.

Fig. 2 zeigt schematisch ein Bremssystem ähnlich wie in Fig. 1, bei dem jedoch die zentrale Steuerung 2 wegfällt und stattdessen Steuereinheiten 30 vorgesehen sind, die eine Recheneinheit mit einer größeren Rechenleistung als die Logikeinheiten 10 aufweisen. Die Steuereinheiten 30 sind über ein Bussystem verbunden und so konfiguriert, dass sie miteinander kommunizieren, um eine oder mehrere bremsenbezogenen Aufgaben individuell oder gemeinsam zu lösen. Die lokalen (dezentralen) Rechenleistungen der Steuereinheiten 30 können daher (virtuell) zentral verwendet werden, um z.B. eine höherwertige Funktion abzubilden.

Darüber hinaus kann die verteilte Rechenleistung auch zur Abbildung redundanter Funktionsstrukturen genutzt werden, um höhere Sicherheitslevel und höhere Verfügbarkeiten im Gesamtsystem zu erreichen (z.B. im Falle, dass eine Steuereinheit defekt ist, eine Bremskraft der dazugehörigen Bremseinheit von mindestens einer anderen Bremseinheit kompensiert werden kann, indem die Steuereinheit der anderen Bremseinheit die dazugehörige Bremskraft entsprechend erhöht). Zusätzlich können Daten, die lokal erzeugt werden, für weitere Funktionen im Sinne einer Digitalisierung (z.B. für Predictive Maintenance) zentral verarbeitet und weitergegeben werden. In diesem Fall ist eine zusätzliche zentrale Steuerung wie im Stand der Technik nicht mehr nötig, wodurch Kosten gespart werden können.

### BEZUGSZEICHENLISTE

- 2: Zentrale Steuerung
- 10: Logikeinheit (Stand der Technik)
- 12: Steuerungssystem
- 20: Bremseinheit
- 30: Steuereinheit

## Patentansprüche

1. Steuerungssystem (12) zur Steuerung eines Bremssystems eines Schienenfahrzeugs, das mehrere Steuereinheiten (30), die jeweils mit einer Bremseinheit (20) verbunden sind, aufweist, wobei die Steuereinheiten (30) jeweils eine eigene Recheneinheit aufweisen und so konfiguriert sind, dass die Steuereinheiten (30) direkt mit einander kommunizieren können, um eine oder mehrere bremsenbezogenen Aufgaben individuell oder gemeinsam zu lösen, **dadurch gekennzeichnet, dass** eine jede lokale Rechnerleistung einer jeden Steuereinheit (30) auch zentral verfügbar ist und zentral verwendet werden kann.

2. Steuerungssystem (12) nach Anspruch 1, wobei die Steuereinheiten (30) eine einheitliche Hardware aufweisen.

3. Steuerungssystem (12) nach Anspruch 1 oder 2, wobei die Steuereinheiten (30) mittels eines Bussystems verbunden sind.

4. Steuerungssystem (12) nach einem der vorherigen Ansprüche, wobei die Steuereinheiten (30) konfiguriert sind, dass eine der Steuereinheiten (30) als Master und die restliche Steuereinheiten (30) als Slave funktionieren.

5. Steuerungssystem (12) nach einem der vorherigen Ansprüche, wobei mindestens zwei der Steuereinheiten (30) unterschiedliche Computerprogramme aufweisen, um eine gleiche Aufgabe mit unterschiedlichen Verfahren zu lösen.

6. Steuerungssystem (12) nach einem der vorherigen Ansprüche, wobei das Steuerungssystem so konfiguriert ist, dass im Falle, dass eine Steuereinheit (30) defekt ist, oder dass eine Bremseinheit (20) oder ein entsprechender elektromechanischer Aktuator defekt ist, eine dadurch fehlende Bremskraft von mindestens einer anderen Bremseinheit (20) kompensiert werden kann, indem die Steuereinheit (30) der anderen Bremseinheit (20) die lokale Bremskraft entsprechend erhöht.

7. Steuerungssystem (12) nach einem der vorherigen Ansprüche, wobei das Steuerungssystem (12) konfiguriert ist, dass die gesamte Rechenleistung der Recheneinheiten der Steuereinheiten (30) zusammen für eine Rechenaufgabe verwendet kann.

8. Steuerungssystem (12) nach Anspruch 7, wobei die Rechenaufgabe eine von den folgenden Aufgaben ist: dynamische Bremskraftverteilung, Verzögerungsregelung, und Gleitschutzregelung.

## Claims

1. Control system (12) for controlling a braking system of a rail vehicle, which has a plurality of controllers (30), which are each connected to a brake unit (20), wherein the controllers (30) each have their own processing unit and are configured such that the controllers (30) are able to communicate directly with one another, in order to individually or jointly perform one or more braking-related tasks,
**characterised in that**,
the local processing power of each controller (30) is also available centrally and can be used centrally.

2. Control system (12) according to claim 1, wherein the controllers (30) have uniform hardware.

3. Control system (12) according to claim 1 or 2, wherein the controllers (30) are connected by means of a bus system.

4. Control system (12) according to any of the preceding claims, wherein the controllers (30) are configured such that one of the controllers (30) operates as the master and the remaining controllers (30) operate as slaves.

5. Control system (12) according to any of the preceding claims, wherein at least two of the controllers (30) have different computer programs, in order to perform the same task using different methods.

6. Control system (12) according to any of the preceding claims, wherein the control system is configured such that, in the event that a controller (30) is defective, or that a brake unit (20) or a corresponding electromechanical actuator is defective,
a resulting lack of braking force can be compensated for by at least one other brake unit (20), by the controller (30) of the other brake unit (20) correspondingly increasing the local braking force.

7. Control system (12) according to any of the preceding claims, wherein the control system (12) is configured such that the total processing power of the processing units of the controllers (30) can be used together for a processing task.

8. Control system (12) according to claim 7, wherein the processing task is one of the following tasks: dynamic braking force distribution, deceleration control, and anti-skid control.

## Revendications

1. Système de commande (12) pour commander un système de freinage d'un véhicule ferroviaire, qui présente plusieurs dispositifs de commande (30), qui sont reliés respectivement à une unité de freinage (20), dans lequel les dispositifs de commande (30) présentent respectivement leur propre unité de calcul et sont configurés de telle sorte que les dispositifs de commande (30) peuvent communiquer directement les uns avec les autres pour résoudre individuellement ou ensemble un ou plusieurs problèmes liés aux freins,
**caractérisé en ce que**
toute puissance de calcul locale de tout dispositif de commande (30) est également disponible de manière centralisée et peut être utilisée de manière centralisée.

2. Système de commande (12) selon la revendication 1, dans lequel les dispositifs de commande (30) présentent un matériel informatique uniforme.

3. Système de commande (12) selon la revendication 1 ou 2, dans lequel les dispositifs de commande (30) sont reliés au moyen d'un système de bus.

4. Système de commande (12) selon l'une quelconque des revendications précédentes, dans lequel les dispositifs de commande (30) sont configurés de telle sorte que l'un des dispositifs de commande (30) fonctionne comme maître et les autres dispositifs de commande (30) fonctionnent comme esclaves.

5. Système de commande (12) selon l'une quelconque des revendications précédentes, dans lequel au moins deux des dispositifs de commande (30) présentent des programmes informatiques différents pour résoudre un problème identique avec des procédés différents.

6. Système de commande (12) selon l'une quelconque des revendications précédentes, dans lequel le système de commande est configuré de telle sorte que, dans le cas où un dispositif de commande (30) est défaillant, ou qu'une unité de freinage (20) ou un actionneur électromécanique correspondant est défaillant,
l'absence d'une force de freinage qui en résulte peut être compensée par au moins une autre unité de freinage (20), en ce que le dispositif de commande (30) de l'autre unité de freinage (20) augmente en conséquence la force de freinage locale.

7. Système de commande (12) selon l'une quelconque des revendications précédentes, dans lequel le système de commande (12) est configuré de telle sorte que la puissance de calcul totale des dispositifs de calcul des dispositifs de commande (30) peut être utilisée conjointement pour un problème de calcul.

8. Système de commande (12) selon la revendication 7, dans lequel le problème de calcul est l'un des problèmes suivants : répartition dynamique de la force de freinage, contrôle de la décélération et contrôle anti-patinage.
